Europäisches Patentamt

European Patent Office

Office européen des brevets

(19)

(11) **EP 0 813 734 B1**

(12) **EUROPÄISCHE PATENTSCHRIFT**

(45) Veröffentlichungstag und Bekanntmachung des Hinweises auf die Patenterteilung:
**28.04.1999 Patentblatt 1999/17**

(21) Anmeldenummer: **96902240.9**

(22) Anmeldetag: **19.02.1996**

(51) Int Cl.⁶: **G10L 5/06**

(86) Internationale Anmeldenummer:
**PCT/DE96/00253**

(87) Internationale Veröffentlichungsnummer:
**WO 96/27871 (12.09.1996 Gazette 1996/41)**

(54) **VERFAHREN ZUR ERKENNUNG MINDESTENS EINES DEFINIERTEN, DURCH HIDDEN-MARKOV-MODELLE MODELLIERTEN MUSTERS IN EINEM ZEITVARIANTEN MESSIGNAL, WELCHES VON MINDESTENS EINEM STÖRSIGNAL ÜBERLAGERT WIRD**

METHOD OF RECOGNISING AT LEAST ONE DEFINED PATTERN MODELLED USING HIDDEN MARKOV MODELS IN A TIME-VARIABLE TEST SIGNAL ON WHICH AT LEAST ONE INTERFERENCE SIGNAL IS SUPERIMPOSED

PROCEDE DE RECONNAISSANCE D'AU MOINS UN MOTIF MODELISE AU MOYEN DE LA MODELISATION MARKOVIENNE, DANS UN SIGNAL DE MESURE VARIANT AVEC LE TEMPS ET AUQUEL SE SUPERPOSE AU MOINS UN SIGNAL PARASITE

(84) Benannte Vertragsstaaten:
**AT CH DE DK FR GB IT LI NL**

(30) Priorität: **07.03.1995 DE 19508016**

(43) Veröffentlichungstag der Anmeldung:
**29.12.1997 Patentblatt 1997/52**

(73) Patentinhaber: **SIEMENS AKTIENGESELLSCHAFT**
**80333 München (DE)**

(72) Erfinder: **ZÜNKLER, Klaus**
**D-85221 Dachau (DE)**

(56) Entgegenhaltungen:
**EP-A- 0 533 491          WO-A-94/23424**

- SPEECH PROCESSING, Bd. 2, 27. - 30. April 1993, , MINNEAPOLIS, MN, US, Seiten 243-246, XP000427771 CARDIN ET AL.: "INTER-WORD COARTICULATION MODELING AND MMIE TRAINING FOR IMPROVED CONNECTED DIGIT RECOGNITION"
- SPEECH COMMUNICATION, Bd. 13, Nr. 3/04, 1. Dezember 1993, Seiten 287-295, XP000421441 SONG ET AL.: "A ROBUST SPEAKER-INDEPENDENT ISOLATED WORD HMM RECOGNIZER FOR OPERATION OVER THE TELEPHONE NETWORK"

## Beschreibung

Verfahren zur Erkennung mindestens eines definierten, durch Hidden-Markov-Modelle modellierten Musters in einen zeitvarianten Meßsignal, welches von mindestens einem Störsignal überlagert wird

Der Mustererkennung kommt wegen der steigenden Automatisierung in technischen Systemen vermehrt Bedeutung zu. Häufig sind die Muster in Meßsignalen enthalten, welche auf die eine oder andere Weise aus Prozessen gewonnen werden, die untersucht werden sollen. Als Beispiele seien hier die Analyse der natürlichen Sprache, oder die Untersuchung von geleisteten Unterschriften zu nennen. Als besonders geeignet für die automatische Analyse von Meßsignalen, haben sich die Hidden-Markov-Modelle [3][4]erwiesen.

Ein Problem bei der automatischen Analyse der Meßsignale besteht jedoch darin, daß die zu untersuchenden Meßsignale häufig von statistischen, oder von betragsmäßig konstanten Störsignalen überlagert werden. Beim Erfassen und der Analyse von natürlich gesprochener Sprache können diese z.B. Hintergrundgeräusche, Atemgeräusche, Maschinengeräusche, oder auch durch das Aufnahmemedium und die Übertragungsstrecke zustande gekommene Störgeräusche sein. Bei anderen Meßsignalen sind analoge Fehlerquellen denkbar. Um trotz der bestehenden Schwierigkeiten ein bekanntes Muster innerhalb eines größeren Musters finden zu können, wurde ein Ansatz mit besonderen Hidden-Markov-Modellen vorgeschlagen [1]. Hierbei wird ein spezielles Modell eingeführt (Garbage oder Background-Modell), welches die Hintergrundgeräusche einschließlich sonstiger Sprache modelliert. Dieses spezielle Modell muß in allen Fällen mit entsprechenden Geräuschen bzw. Sprache trainiert werden. Das bedeutet, daß nur solche Geräusche bzw. Störungen beim Erkennen eines Musters berücksichtigt werden können, die im Trainingsmaterial vorhanden sind. In jedem Fall hat die Modellierung dieses Modells einen großen Einfluß auf die gesamte Wahrscheinlichkeit eines Schlüsselwortes, bzw. irgendeines zu erkennenden Musters. Ein weiterer Nachteil ist, daß dieses Hintergrundmodell auch Sprachlaute bzw. bei anderen Meßsignalarten Musteranteile erkennt, die eigentlich zu einem zu erkennenden Muster, bzw. Schlüsselwort gehören. Dabei ergibt sich das zusätzliche Problem einer geeigneten Gewichtung der Modelle, um eine zu niedrige Detektionsrate zu vermeiden [1]. Weitere Möglichkeiten Störanteile bei der Analyse von Meßsignalen mit Hilfe von Hidden-Markov-Modellen zu berücksichtigen, sind aus dem Stand der Technik nicht bekannt.

Die der Erfindung zugrundeliegende Aufgabe, besteht also darin, ein Verfahren anzugeben, mit dem in einem Meßsignal vorhandene Muster, welche von einem Störsignal überlagert werden, besser erkannt werden können.

Diese Aufgabe wird gemäß den Merkmalen des Patentanspruches 1 gelöst.

Weiterbildungen der Erfindung ergeben sich aus den Unteransprüchen.

Ein besonderer Vorteil des erfindungsgemäßen Verfahrens besteht darin, daß es Hintergrundgeräusche jeglicher Art eleminieren kann und sich gleichzeitig von jedweden anderen Phonem-Modellen unterscheidet.

Ein weiterer Vorteil des erfindungsgemäßen Verfahrens besteht darin, daß die zur Mustererkennung verwendeten Hidden-Markov-Modelle nicht auf Hintergrundgeräusche trainiert werden müssen.

Vorteilhafterweise wird hier durch das erfindungsgemäße Verfahren die Wahrscheinlichkeit für eine Mustererkennung völlig unabhängig von im Meßsignal vorhandenen Störgeräuschen. Vorteilhafterweise wird also nur der Zeitabschitt des

Meßsignals untersucht, in welchem das zu erkennende Muster vorhanden ist.

Vorteilhafterweise ist das erfindunsgemäße Verfahren für jegliche Art von Standardverfahren zur Anwendung geeignet.

Besonders vorteilhaft kann der Viterbi-Algorithmus zur Mustersuche und zur Bewertung der Wahrscheinlichkeiten eingesetzt werden [2]. Vorteilhafterweise ist das Verfahren jedoch auch für das Baum-Welch-Verfahren geeignet, wozu nur kleinere Modifikationen erforderlich sind.

Vorteilhafterweise sieht es das erfindungsgemäße Verfahren vor, beim Einsatz des Viterbi-Algorithmus die im Pfad akkumulierten Gesamtemissionswahrscheinlichkeiten auf die Anzahl der bis zu diesem Zeitpunkt berücksichtigten Emissionswahrscheinlichkeiten zu normieren, um damit eine Bevorzugung kürzerer Pfade zu vermeiden.

Vorteilhafterweise wird die erfindungsgemäß durchgeführte Veränderung der Hidden-Markov-Modelle bei der Berechnung der Gesamtemissionswahrscheinlichkeiten dadurch berücksichtigt, daß ein einfacher Faktor eingeführt wird, der in Abhängigkeit von vorhandenen Hintergrundzuständen die Zahl der zu berücksichtigenden Emissionswahrscheinlichkeiten die Zahl dieser Emissionswahrscheinlichkeiten in Abhängigkeit der vorhandenen Hintergrundzustände, bzw. Störzustände verändert.

Vorteilhafterweise wird beim Einsatz des Baum-Welch-Verfahrens im erfindungsgemäßen Verfahren die Summenfunktion als Ersatz für die Maximum-Operation herangezogen, um ebenfalls der unterschiedlichen Zahl der auftretenden Emissionswahrscheinlichkeiten auf dem Pfad Rechnung tragen zu können.

Besonders vorteilhaft können mit dem erfindungsgemäßen Verfahren Sprachsignale und insbesondere dabei Schlüsselwörter analysiert werden. Dort treten häufig Hintergrundgeräusche auf und mathematisch effiziente Verfahren zur Sprachanalyse sind wegen der dort auftretenden hohen Datenströme und der Echtzeitanforderungen besonders wichtig.

Vorteilhaft kann das erfindungsgemäße Verfahren auch zur Analyse von Handschreibvorgängen verwendet werden, wobei das Meßsignal, das zu analysieren ist, besonders vorteilhaft durch optische oder durch Druckmeßmittel ermittelt wird. Hierbei handelt es sich um häufig auftretende Mustererkennungsvorgänge für die sichere Methoden erforderlich sind.

Im folgenden wird die Erfindung anhand einer Figur weiter erläutert.

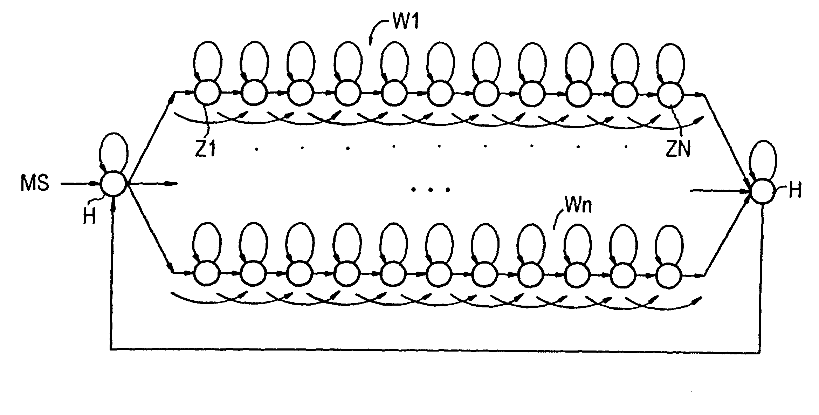

Figur 1 zeigt ein Beispiel eines erfindungsgemäßen Verfahrens.

Dort sind dargestellt, für die einzelnen zu erkennenden Muster verschiedene Hidden-Markov-Modelle W1 bis Wn. Die einzelnen Hidden-Markov-Modelle der zu erkennenden Muster zeichnen sich durch eine Vielzahl von Zuständen Z1 bis ZN aus. Besonders vorteilhaft wird durch das erfindungsgemäße Verfahren an jedes einzelne Hidden-Markov-Modell ein besonderer Zustand angehängt, der hier mit H bezeichnet ist. Vorteilhaft wird dieser Zustand jeweils direkt vor und direkt hinter dem jeweils zuerkennenden Hidden-Markov-Modell angefügt. Dieser Zustand H des jeweiligen Hidden-Markov-Modells repräsentiert die Störgeräusche in der Umgebung. Er zeichnet sich besonders dadurch aus, daß er keine Emissionswahrscheinlichkeit und keine Übergangswahrscheinlichkeit besitzt. Auf diese Weise wird durch das erfindungsgemäße Verfahren besonders vorteilhaft erreicht, daß das jeweilige zu untersuchende Muster und das dafür vorhandene Hidden-Markov-Modell einfach zur Deckung gebracht werden kann, weil für die Erkennung des Musters nur der relevante Zeitabschnitt, in dem das Muster im Meßsignal vorkommt, verwendet wird. Das zu analysierende Meßsignal MS ist hier von links eingehend angedeutet.

Das erfindungsgemäße Verfahren kann beispielsweise zur automatischen Spracherkennung in Einzelwortkommandosystemen eingesetzt werden. Dort tritt in der Praxis häufig der Fall auf, daß der Sprecher eines der erlaubten Kommandowörter spricht und dieses beispielsweise in einen Satz einbettet. Ein weiterer Fall der mit herkömmlichen Erkennern nicht zufriedenstellend gelöst werden kann, ist die Störung durch ein Umgebungsgeräusch vor und nach dem Kommando oder Schlüsselwort.

Zur Lösung wird hier das erfindungsgemäße Verfahren vorgeschlagen, welches in der Lage ist, beispielsweise Schlüsselwörter innerhalb von beliebigen Störsignalen zu finden und zu erkennen. Hierbei wird im Gegensatz zu anderen Ansätzen keinerlei Voraussetzung über die Hintergrundgeräusche gemacht. Falls das Verfahren bei Spracherkennung eingesetzt wird, sind keinerlei Annahmen über die Art des Störsignales erforderlich. Das erfindungsgemäße Verfahren erreicht dies, indem Hidden-Markov-Modelle eingesetzt werden, wobei jedes Modell für ein Schlüsselwort oder ein zu erkennendes Muster mit einem speziellen Zustand am Wortanfang und am Wortende ergänzt wird, welcher das Hintergrund- geräusch bzw. die Störung repräsentiert. Hier muß also im Gegensatz zu den bekannten Verfahren dieser spezielle Zustand nicht auf mögliche Hintergrundgeräusche trainiert werden. So wird es mit dem beschriebenen Verfahren einfach möglich, nur jenen Zeitabschnitt zu berücksichtigen, der tatsächlich das betreffende Muster enthält. Der Rest des Signales kann dabei unberücksichtigt bleiben und somit wird die Worterkennung bzw. die Mustererkennung stark vereinfacht und der damit verbundene Rechenaufwand stark verringert.

Bisherige Verfahren haben den Nachteil das zugrundeliegende Hintergrundmodell für die Störgeräusche auch Musteranteile enthält. Somit ist eine saubere Trennung zwischen dem zu erkennenden Muster und dem Hintergrundrauschen nicht gegeben. Hier setzt die Erfindung an, die quasi künstlich, die im Meßsignalfluß zu erkennenden Muster besonders aufbereitet. Hierzu werden die erarbeiteten Hidden-Markov-Modelle für die einzelnen Muster um einen speziellen Zustand erweitert, welcher sich dadurch auszeichnet, daß er keine Emissionsenergie und keine Übergangswahrscheinlichkeit besitzt. Damit wird das zu erkennende Muster sauber vom Rest der Meßsignalinformation separierbar. Und somit ermöglicht es das erfindungsgemäße Verfahren, daß für die Mustererkennung exakt der Zeitabschnitt des Meßsignales Verwendung finden kann, der das zu erkennende Muster enthält. Wie bei den bekannten Verfahren wird hier ein spezielles Modell für Hintergrundstörungen zu den Hidden-Markov-Modellen der zu erkennenden Muster hinzugefügt. Jedoch besteht dieses Muster Modell nur aus einem einzigen Zustand und unterscheidet sich zu den übrigen Standardmodellen sowohl in seinen Übergangswahrscheinlichkeiten, wie auch in den Emissionswahrscheinlichkeiten. Die gewählte Übergangswahrscheinlchkeit berücksichtigt, daß keine Vorhersage über die Dauer der Umgebungsstörung gemacht werden kann. Die zeitliche Lage des gesuchten Musters ist für eine Erzeugungswahrscheinlichkeit damit wie gewünscht völlig irrelevant. Zusätzlich erübrigt sich eine explizite Bestimmung der Wortgrenzen. Analog zu den Übergangswahrscheinlichkeiten werden auch die Emissionswahrscheinlichkeiten nicht berücksichtigt, da die Störungen nicht ausreichend modelliert werden können. Dies hat den großen Vorteil, daß auch neue und unerwartete Störungen absorbiert werden, ohne daß das Modell darauf trainiert werden müßte. Die Wahrscheinlichkeit für ein Schlüsselwort ist also bei der Spracherkennung völlig unabhängig von der Umgebung, d.h. es wird nur der für das Schlüsselwort relevante Zeitabschnitt berücksichtigt. Dieser Vorteil des unnötigen Trainings eines Hintergrundmodells wird allerdings durch einen erhöhten Rechenaufwand bei der Erkennung des Musters erkauft. Es tritt dabei folgendes Problem auf: Bei der Rekombination, d.h. beim Vergleich zweier möglicher Pfade und der Entscheidung für den wahrscheinlicheren Pfad, sind in den Pfaden im allgemeinen verschieden, viele gültige Emissionswahrscheinlichkeiten enthalten. Dies ergibt sich auch aus der Tabelle 1, die ein programm-listing im Pseudocode enthält und ein Beispiel des erfindungsgemäßen Verfahrens darstellt. Dort ist besonders der Abschnitt accumulate-emission-probability zu berücksichtigen. Das Problem besteht nun darin, daß der Viterbi-Algorithmus sich immer für den Pfad mit der größten Wahrscheinlichkeit entscheidet. Das ist hier in der Regel derjenige Pfad mit den wenigsten gültigen Emissionswahrscheinlichkeiten. Das hat zur Folge, daß für jeden Vergleich eine Normierung der akkumulierten Wahrscheinlichkeit auf die jeweilige Anzahl der gültigen Emissionswahrscheinlichkeiten auf dem zugehörigen Pfad durchgeführt werden muß. Insbesondere muß bei dieser Bewertung der Natur des hinzugefügten künstlichen Umgebungszustandes Rechnung getragen werden, der wie zuvor bereits beschrieben, keinerlei Emissions- und Übergangswahrscheinlichkeit aufweist und so zu einer Verfälschung der Bewertung führen würde. In Formeln ausgedrückt, würde die akkumulierte Wahrscheinlichkeit für das Standard-Viterbi-Verfahren mit folgender effektiver rekursiven Gleichung angegeben:

$$\delta_{t+1}(j) = \max_{1 \le i \le N}\left(\delta_t(i)a_{ij} * b_j(O_{t+1})\right)$$

Hierbei bedeuten t der aktuelle Zeitpunkt, j der aktuelle Modellzustand, i,j Indices des Modellzustände, a die Übergangswahrscheinlichkeit aus dem Zustand i zu dem Zustand j, $b_j$ die Emissionswahrscheinlichkeit des Zustandes j bei der Observation O, beispielsweise der Merkmale eines Sprachsignales und N die Anzahl der Modellzustände. Im vorliegenden Verfahren wird dies in eine andere Darstellungsform überführt. Für die Emissionswahrscheinlichkeit gilt dann folgender Zusammenhang. Es sind beispielsweise np Segmente $\{S_0, S_1, S_{N-1}\}$ definiert, wobei beispielsweise $S_0$ das sogenannte Hintergrundmodell-Segment ist. Jedem Zustand j, $1 \le j \le N$, eines Wortmodelles ist dabei genau eine Segment Segm(j)=$S_k$ zugeordnet, wobei gilt Segm(1) = Segm(N) = $S_0$. Im folgenden werden statt Wahrscheinlichkeiten Scores notiert, ansonsten analog zu [3]. $a_{ij}$ wird notiert als $A_{ij}$ (d.h. $A_{ij}$ = -const $\ln a_{ij}$) $b_j(O_t)$ wird notiert als $B(S_k, O_t)$= -const ln $b_k(O_t)$ $\delta_t(j)$ wird notiert als $\Delta_t(j)$ zusätzlich wird definiert:

$$LSc(S_k, O_t) = B(S_k, O_t) - \min_{1 \le l \le N-1} B(S_l, O_t) \quad \text{local Score}$$

Der HMM-Rekursionsalgorithmus läßt sich somit in folgender Modifikation darstellen:

$$\Delta_t^{Inkrement}(i,j) = \begin{cases} 0 & \text{falls } Segm(j) = S_0 \text{ und } i = j \\ A_{ij} + LSc(S_j, O_t) & \text{sonst} \end{cases}$$

$$\Psi(j) = \operatorname*{arg\,min}_{1 \le i \le N} \frac{\Delta_t(i) + \Delta_{t+1}^{Inkrement}(i,j)}{l_t(i) + 1}$$

$$\Delta_{t+1}(j) = \Delta_t(\Psi(j)) + \Delta_{t+1}^{Inkrement}(\Psi(j), j) \quad \text{integraler Score}$$

wobei $l_t(i)$ die Anzahl der $\Delta^{Inkrement}$ bedeutet, die in $\Delta_t(i)$ aufakkumuliert sind und aus dem "sonst"-Fall der $\Delta^{Inkrement}$-Definition stammen.

Analog läßt sich dies auch für das Baum-Welch-Verfahren ergeben, wenn die argmin-Operation durch die Summenfunktion ersetzt wird. Im Vergleich zu den Standard-Erkennungsverfahren verdoppelt sich hier der Speicheraufwand beim erfindungsgemäßen Verfahren durch die zusätzliche Speicherung der Pfadlänge. Dagegen jedoch ist dieses Verfahren durch den Wegfall eines Trainings für die Hintergrundstörungen sehr robust gegenüber beliebigen Hintergrundstörungen vor und nach dem zu erkennenden Muster. Besonders günstig läßt sich dieses Verfahren nicht nur in der Spracherkennung, sondern allgemein in der Mustererkennung einsetzen (z.B. Medizintechnik, Bilderkennung, Schrift erkennung).

Im folgenden wird die Tabelle 1) erläutert, welche ein Beispiel eines erfindungsgemäßen Verfahrens als ein Programm im Pseudocode angibt, mit dem Spracherkennung nach dem erfindungsgemäßen Verfahren durchgeführt

EP 0 813 734 B1

werden kann.

Das Programm beginnt mit einer Hauptroutine, die durch main und end begrenzt wird. Sie enthält die Unterroutine word-spotter. Beispielsweise werden hier Kommandowörter, die in einem Sprachsignal enthalten sind, erkannt. Dieses soll mit Hilfe von trainierten Hidden-Markov-Modellen geschehen. Die Unterroutine word-spotter führt nun für jedes Referenzmodell eine Berechnung der Modellemissionswahrscheinlichkeiten durch. Dies ist in Form einer do-Schleife mit "foreach" und "enddo" begrenzt, gelöst. Die do-Schleife enthält eine Routine, compute-modell-emission-probability. In dieser Schleife wird für alle Merkmalsvektoren des zu klassifizierenden Musters die lokale logarithmierte Emissionswahrscheinlichkeit, d.h. die Wahrscheinlichkeit, daß der Merkmalsvektor $O_t$ vom Modellzustand k emittiert wurde, berechnet. Anschließend wird die Emissionswahrscheinlichkeit des besten Pfades für Modellzustand k ermittelt. Dies geschieht mit der Subroutine accumulate-emission-probability. Die Länge des besten Pfades wird durch diese Routine ermittelt und abgespeichert. Falls das Ende des Wortes erreicht wurde, stellt die Routine if word_end_detected dieses fest und veranlaßt einen Rücksprung zum Hauptprogramm. Die Routine compute-modell-emission-probability enthält eine weitere Subroutine compute-local-emission-probability. Mit dieser routine werden die lokalen Emissionenswahrscheinlichkeiten $b_k(O_t)$ der einzelnen Zustände ermittelt. Dies ist besonders wichtig, da hier das erfindungsgemäße Verfahren greift. Denn erfindungsgemäß weist der besondere Zustand, der den einzelnen Hidden-Markov-Modellen am Musteranfang und am Musterende hinzugefügt wird, keine Emissionswahrscheinlichkeit auf. Das heißt, seine lokale Wahrscheinlichkeit ist 1 und seine Emissionswahrscheinlichkeit demzufolge 0. Diese Subroutine übergibt für diesen Fall den Wert 0, sonst berechnet sie ganz normal die Emissionswahrscheinlichkeit für den aktuellen Merkmalsvektor. Die Subroutine compute-modell-emission-probabilitiy enthält weiterhin die Subroutine accumulate-emission-probability. Dort werden die akkumulierten Wahrscheinlichkeiten der einzelnen Pfade aller möglichen Vorgänger, normiert auf ihre jeweilige Länge miteinander verglichen. Im Anschluß wird die beste Wahrscheinlichkeit für die Erkennung des Musters gespeichert. Das heißt die Summe aus akkumulierter logarithmierter Emissionswahrscheinlichkeit des besten möglichen Vorgängerzustandes und der lokalen logarithmierten Emissionswahrscheinlichkeit wird gespeichert. Dabei wird beispielsweise die Länge des zu erkennenden Musters ohne das Hintergrundgeräusch abgelegt.

Dieses Beispiel ist nicht als einschränkend für die Erfindung anzusehen. Es soll lediglich den Grundgedanken der Erfindung konkretisieren. Besonders ist zu beachten, daß die Erfindung für beliebige Arten der Mustererkennung geeignet ist. Insbesondere kann es auch bei der Schrifterkennung und bei Signalisierungsverfahren angewendet werden.

# Tabelle 1

```
main()
        word-spotter()        ! Word-Spotting mit
                              ! Hidden-Markov-Modellen
end


--------------------------
word-spotter()

        foreach reference-model m do
                              ! Schleife ueber zusammengesetzte
                              ! Referenz-Modelle
                compute-model-emission-probability()
                              ! Berechne Gesamtemissionswahrschein-
                              ! lichkeit des Modells, d.h. Wahrschein-
                              ! lichkeit, dass die zu klassifizierende
                              ! Folge von Merkmalsvektoren vom Markov-
                              ! Modell m erzeugt wurde
        enddo
        ranking()             ! Ordne Markov-Modelle nach ihrer
                              ! Gesamtemissionswahrscheinlichkeit
        rejecting()           ! Rueckweisung von Aeusserungen ohne
                              ! Schluesselwort
end


--------------------------
compute-model-emission-probability()

        initialize()          ! initialisiere akkumulierte
                              ! Emissionswahrscheinlichkeiten
        foreach frame t do    ! Schleife ueber Merkmalsvektoren des
                              ! zu klassifizierenden Musters
          foreach state k do  ! Schleife ueber Modellzustaende
                compute-local-emission-probability()
                              ! Berechne lokale logarithmierte
                              ! Emissionswahrschein-
                              ! lichkeit, d.h. Wahrscheinlichkeit,
                              ! dass der Merkmalsvektor O_t vom Modell-
                              ! zustand k emittiert wurde
                accumulate-emission-probability()
                              ! Berechne Emissionswahrschein-
                              ! lichkeit des besten Pfades
                              ! fuer Modellzustand k und
```

```
                                              ! speichere Laenge des besten Pfades innerhalb
                                              ! des Schluesselwortes
                        end do k
                        if word_end_detected()  ! Abbruch der Suche, wenn Wortende
                                              ! detektiert wurde
                              return
                  end do t
      end


      ----------------------------
      compute-local-emission-probability()

            if state == background ! Wenn Modellzustand Hintergrundgeraeusch
                              ! erwartet, ist lokale Wahrscheinlichkeit = 1
                  return 0    ! = log (1)
            else
                  compute-emission-probability()
                              ! Berechnung einer logarith-
                              ! mierten Emissionswahrscheinlichkeit
                              ! fuer den aktuellen Merkmalsvektor
            endif
      end


      ---------------------------
      accumulate-emission-probability()

            compare-emission-probabilities()
                              ! Vergleiche die akkumulierten Wahrscheinlichkeiten
                              ! aller moeglichen Vorgaenger, normiert auf
                              ! ihre jeweilige Laenge

            store-best-probability()
                              ! speichere Summe aus akkumulierter
                              ! logarithmierter Emissionswahrschein-
                              ! lichkeit des besten moeglichen
                              ! Vorgaengerzustandes und der lokalen
                              ! logarithmierten
                              ! Emissionswahrscheinlichkeit,
                              ! dabei die Laenge des Wortes ohne Hinter-
                              ! grundgeraeusch speichern.
      end
      ---------------------------
```

Literatur

[1] Rose.R.C. und D.B. Paul (1990). A hidden markov model based keyword recognition system. In IEEE International Conference on Acoustics, Speech and Signal Processing, pages 129 - 132, Albuquerque. ICASSP.

[2] Forney, D.G. (1973). The Viterbi algorithm. Proceedings of the IEEE, 61(3): 268 - 278.

[3] Rabiner, L.R. und B.H. Juang (1986). An introduction to hidden markov models. IEEE Transactions on Acoustics, Speech and Signal Processing, (1): 4-16.

[4] Cardin, R et al, "Inter-Word Coarticulation Modeling and MMIE Training for Improved Connected Digit Recognition"; In IEEE International Conference on Acoustics, Speech and Signal Processing, April 27-30, 1993 Minneapolis Volume II pages 243-246, ICASSP-93

**Patentansprüche**

1. Verfahren zur Erkennung mindestens eines definierten, durch Hidden Markov Modelle modellierten Musters in einem zeitvarianten Meßsignal, welches von mindestens einem Störsignal überlagert wird,

   a) bei dem jedes der Hidden Markov Modelle an seinem Anfang und an seinem Ende um jeweils eine einzigen identischen Zustand ergänzt wird, welcher stellvertretend für das Störsignal steht und mindestens folgende Eigenschaften hat:

   - um Unabhängigkeit von der zeitlichen Lage des definierten Musters zu erzielen, weist er keine Übergangswahrscheinlichkeiten auf,
   - um Unabhängigkeit von Störsignalen in der zeitlichen Umgebung des definierten Musters zu erzielen, weist er keine Emissionswahrscheinlichkeiten auf,

   b) und bei dem das definierte Muster mit einem bekannten Vergleichsverfahren mit Hilfe der erweiterten Hidden Markov Modelle im zeitvarianten Meßsignal gesucht und erkannt wird.

2. Verfahren nach Anspruch 1, bei dem als Vergleichsverfahren der Viterbi-Algorithmus verwendet wird.

3. Verfahren nach Anspruch 1, bei dem als Vergleichsverfahren das Baum-Welch-Verfahren verwendet wird.

4. Verfahren nach einem der Ansprüche 2 oder 3, bei dem im Vergleichsverfahren bei jeder Rekombination von Pfaden, die je Pfad akkumulierten Gesamtemissionswahrscheinlichkeiten auf die Anzahl der bis zu diesem Zeitpunkt berücksichtigten Emissionswahrscheinlichkeiten normiert wird, um eine Bevorzugung kürzerer Pfade zu vermeiden.

5. Verfahren nach Anspruch 2 oder 4 ohne 3, bei dem die Normierung auf folgende Weise erfolgt:

$$\Delta_t^{Inkrement}(i,j) = \begin{cases} 0 & falls\ Segm(j) = S_0\ und\ i = j \\ A_{ij} + LSc\ (S_j, O_t) & sonst \end{cases}$$

$$\Psi(j) = \begin{array}{c} arg\ min \\ 1 \le i \le N \end{array} \frac{\Delta_t(i) + \Delta_{t+1}^{Inkrement}(i,j)}{l_t(i)+1}$$

mit:

$$\Delta_{t+1}(j) = \Delta_t(\Psi(j)) + \Delta_{t+1}^{Inkrement}(\Psi(j),j)\quad integralerScore$$

$$LSc(S_k, O_t) = B(S_k, O_t) - \min_{1 \le l \le N-1} B(S_l, O_t)\ \texttt{local Score}$$

$Segm(1) = Segm(N) = S_0$
$a_{ij}$ wird notiert als $A_{ij}$ (d.h. $A_{ij} = -const\ lna_{ij}$)
$b_j(O_t)$ wird notiert als $B(S_k, O_t) = -const\ ln\ b_k(O_t)$
$\delta_t(j)$ wird notiert als $\Delta_t(j)$

t: aktueller Zeitpunkt
j: aktueller Modellzustand
$a_{ij}$: die Übergangswahrscheinlichkeit
$b_j(O_t)$: die Emissionswahrscheinlichkeit der Observation $O_t$
N: Anzahl der Modellzustände

wobei $I_t(i)$ die Anzahl der $\Delta^{Inkrement}$ bedeutet, die in $\Delta_t(i)$ aufakkumuliert sind und aus dem "sonst"-Fall der $\Delta^{Inkrement}$-Definition stammen; Anstatt von Wahrscheinlichkeiten werden Scores notiert, ansonsten Bezeichnungen analog zu [3].

6. Verfahren nach Anspruch 3 oder 4 ohne 2, bei dem die Maximum-Operation durch eine Summenfunktion ersetzt wird.

7. Verfahren nach einem der vorangehenden Ansprüche, bei dem das Meßsignal eines Sprachsignales verwendet wird.

8. Verfahren nach einem der vorangehenden Ansprüche, bei dem das Meßsignal eines Handschreib-Vorganges verwendet wird.

9. Verfahren nach Anspruch 8, bei dem das Meßsignal auf optischem Wege ermittelt wird.

10. Verfahren nach Anspruch 8, bei dem das Meßsignal durch Messung des Anpreßdruckes beim Schreiben ermittelt wird.

**Claims**

1. Method for recognizing at least one defined pattern modelled by using hidden Markov models in a time-variable test signal on which at least one interference signal is superimposed,

    a) in which each of the hidden Markov models is supplemented at its beginning and at its end by in each case one single identical state which is representative of the interference signal and has at least the following characteristics:

    - to achieve independence from the temporal position of the defined pattern, it exhibits no transition probabilities,
    - to achieve independence from interference signals in the temporal environment of the defined pattern, it exhibits no emission probabilities,

    b) an in which the defined pattern is searched for and recognized in the time-variable test signal with the aid of the extended hidden Markov models by means of a known comparison method.

2. Method according to Claim 1, in which the Viterbi algorithm is used as comparison method.

3. Method according to Claim 1, in which the Baum-Welch method is used as comparison method.

4. Method according to one of Claims 2 or 3, in which, in the comparison method, the total emission probabilities accumulated per path are normalized with each recombination of paths, to the number of emission probabilities taken into consideration up to this point in time in order to avoid a preferential treatment of shorter paths.

5. Method according to Claim 2 or 4 without 3, in which the normalization is performed in the following manner:

$$\Delta_t^{Increment}(i,j) = \{0 \text{ if } Segm(j)=S_0 \text{ and } i = j$$

$$A_{ij} + LSc(S_j, O_t) \text{ else}$$

$$\Psi(j) = \arg\min_{1 \le i \le N} \frac{\Delta_t(i) + \Delta_{t+1}^{\text{Increment}}(i,j)}{l_t(i) + 1}$$

where:

$$\Delta_{t+1}(j) = \Delta_t(\Psi(j)) + \Delta_{t+1}^{\text{Increment}}(\Psi(j),j) \quad integral\ score$$

$$i+1$$

$$LSc(S_k, O_t) = B(S_k, O_t) - \min_{1 \le l \le N-1} B(S_l, O_t) \quad local\ score$$

$\text{Segm}(1) = \text{Segm}(N) = S_0$

$a_{ij}$ is noted as $A_{ij}$ (i.e. $A_{ij} = -\text{const} \ln a_{ij}$)

$b_j(O_t)$ is noted as $B(S_k, O_t) = -\text{const} \ln b_k(O_t)$

$\delta_t(j)$ is noted as $\Delta_t(j)$

t: current point in time

j: current state of the model

$a_{ij}$: the transition probability

$b_j(O_{t)})$ : the emission probability of the observation $O_t$

N: number of model states

where $l_t(i)$ is the number of the $\Delta^{\text{Increment}}$ which are accumulated together in $\Delta_t(i)$ and originate from the "else" case of the $\Delta^{\text{Increment}}$ definition; instead of probabilities, scores are noted, otherwise designations analogous to [3].

6. Method according to Claim 3 or 4 without 2, in which the maximum operation is replaced by a sum function.

7. Method according to one of the preceding claims, in which the test signal of a voice signal is used.

8. Method according to one of the preceding claims, in which the test signal of a handwriting process is used.

9. Method according to Claim 8, in which the test signal is determined by optical means.

10. Method according to Claim 8, in which the test signal is determined by measuring the contact pressure during writing.

**Revendications**

1. Procédé pour reconnaître au moins un motif défini, modélisé par des modèles Hidden-Markov dans un signal de mesure variant dans le temps, auquel se superpose au moins un signal parasite,

    a) dans lequel chacun des modèles Hidden-Markov est complété, à son début et à sa fin respectivement, par un état identique isolé qui est représentatif du signal parasite et qui a au moins les propriétés suivantes :

    - afin d'obtenir l'indépendance par rapport à la position dans le temps du motif défini, il ne présente aucune probabilité de transition,
    - afin d'obtenir l'indépendance par rapport aux signaux parasites existants dans l'environnement temporel du motif défini, il ne présente aucune probabilité d'émission,

b) et dans lequel le motif défini est recherché et reconnu dans le signal de mesure variant dans le temps, avec un procédé de comparaison connu utilisant des modèles Hidden-Markov élargis.

2. Procédé selon la revendication 1, dans lequel on utilise comme procédé de comparaison l'algorithme Viterbi.

3. Procédé selon la revendication 1, dans lequel on utilise comme procédé de comparaison le procédé Baum-Welch.

4. Procédé selon une des revendications 2 ou 3, dans lequel, dans le procédé de comparaison, à chaque recombinaison de chemins, les probabilités d'émissions globales accumulées par chemin sont normées sur le nombre des probabilités d'émissions prises en compte à cet instant, pour éviter que des chemins plus courts ne soient privilégiés.

5. Procédé selon la revendication 2 ou 4 ou 3, dans lequel la normalisation se produit de la façon suivante :

$$\Delta_t^{\text{incrément}}(i, j) = \begin{cases} O & \text{si Segm(j)} = S_0 \text{ et } i = j \\ \\ A_{ij} + LSc(S_j, O_t) & \text{autrement} \end{cases}$$

$$\Psi(j) = \frac{\underset{1 \le i \le N}{\arg\min} \; \Delta_t(i) + \Delta_{t+1}^{\text{incrément}}(i, j)}{I_t(i) + 1}$$

avec :

$$\Delta_{t+i}(j) = \Delta_t(\Psi(j)) + \Delta_{t+1}^{\text{incrément}}(\Psi(j), j) \quad \text{score intégral}$$

$$LSc(S_k, O_t) = B(S_k, O_t) - \underset{t \le l \le N-1}{\min} B(S_l, O_t) \quad \text{score local}$$

Segm (1) - Segm (N) = $S_o$
$a_{ij}$ est noté $A_{ij}$ (c'est-à-dire $A_{ij} = -\text{const ln}a_{ij}$)
$b_j(O_t)$ est noté $B(s_k, O_t) = -\text{const ln } b_k(O_t)$
$\delta_t(j)$ est noté $\Delta_t(j)$

t:            instant actuel
j:            état actuel du modèle
$a_{ij}$:       probabilité de transition
$b_j(O_t)$:   probabilité d'émission de l'observation $O_t$
N:            nombre des états du modèle

où $I_t(i)$ signifie le nombre des $\Delta^{\text{incrément}}$ qui sont accumulés dans $\Delta_t(i)$ et proviennent du cas "autrement" de la définition $\Delta^{\text{incrément}}$ ; en remplacement des probabilités, on note des scores, pour le reste, on utilise les désignations analogues à [3].

6. Procédé selon la revendication 3 ou 4 sans 2, dans lequel l'opération de maximum est remplacée par une fonction somme.

EP 0 813 734 B1

**7.** Procédé selon une des revendications précédentes, dans lequel on utilise le signal de mesure d'un signal de parole.

**8.** Procédé selon une des revendications précédentes, dans lequel on utilise le signal de mesure d'un processus d'écriture à la main.

**9.** Procédé selon la revendication 8, dans lequel le signal de mesure est obtenu par voie optique.

**10.** Procédé selon la revendication 8, dans lequel le signal de mesure est obtenu par la mesure de la pression lors de l'écriture.